# EUROPEAN PATENT SPECIFICATION

(11) **EP 3 295 087 B1**
(45) Date of publication and mention of the grant of the patent: **29.01.2020**
(21) Application number: 16729989.0
(22) Date of filing: 12.05.2016
(51) Int. Cl.: F24D 19/10, G05D 23/19

(54) **METHOD FOR OPTIMIZING THE EFFICIENCY OF CLIMATE CONTROL PLANTS**
VERFAHREN ZUR OPTIMIERUNG DER EFFIZIENZ VON KLIMAREGELUNGSANLAGEN
PROCÉDÉ D'OPTIMISATION DE L'EFFICACITÉ D'INSTALLATIONS DE CLIMATISATION

(30) Priority: 14.05.2015 IT UB20150184
(43) Date of publication of application: 21.03.2018
(73) Proprietor: Russi, Massimo Luigi, 20151 Milano (MI) (IT); Minisini, Fabrizio, 00043 Ciampino (RM) (IT)
(72) Inventor: RUSSI, Massimo Luigi, I-20151 Milano (MI) (IT)
(86) International application number: PCT/IB2016/052720
(87) International publication number: WO 2016/181333

(56) References cited:
- EP-A2- 1 837 606
- US-A1- 2004 007 628
- US-A1- 2008 277 487
- US-B1- 6 409 090

## Description

### Field of the art

The present invention refers to the field of methods for optimizing the efficiency of climate control plants. More in detail, the present invention refers to a method that, by actuating the turning off of the pumps set for conveying hot or cold water in the plant and by analyzing the thermal state of the water during stoppage and at the restart, allows communicating to the energy supplying system the right amount of heat (or cold) to be produced for supplementing the energy part (in cold or hot form) that is actually removed, avoiding the production of energy surpluses and reducing the costs associated therewith.

### State of the art

Heating plants for civilian uses have been known now for many years. The heat production obtainable with these systems is, in most cases, associated with a considerable energy expenditure; indeed, during the cold season, such expenditure can even reach more than two-thirds of the energy consumption of an entire house. For such reasons, the technology of these systems is in continuous evolution, increasingly aiming to obtain heating plants with high performances, characterized by low energy consumption, and which also involve a substantial reduction of the produced pollution.

Typically, a heating plant comprises a boiler, within which there is a chamber for heating the water; a plurality of delivery pipes through which the water, thrust by suitable pumps, flows from the boiler towards one or more diffusers; and a plurality of pipes within which the water flows from said diffusers in order to return into the boiler.

The heating plants can easily be divided into 2 types of plants, the first with small power intended for home use (in Italy, plants up to 35 Kw), the second for large-size plants (over 35 Kw).

The first category includes all those plants managed and controlled by a thermostat or programmable thermostat having the purpose of limiting the consumption by means of setting specific temperatures which the home environment must attain; the second category includes all those other plants whose operation and regulation are better described hereinbelow.

The need to arrange an effective system for controlling the turning on and off of the boilers is particularly necessary in those buildings that employ centralized heating systems.

Many expedients are employed today on the over-35 Kw plants for the automatic regulating of the heating production, but all stem from and refer to a single method that provides for the measurement of the temperature of the delivery water, exiting from the boiler, and the control thereof by means of the use of outside climate probes which, being based on theoretical climate curves obtained from years of experience, drive the mixing valves placed inside the heating plant.

More in detail, once a high delivery value has been set for the water exiting from the boiler, the reduction of such value depends on the reading of the temperature outside the property by means of the use of outside probes termed climate probes.

Typically, the climate probe detects a certain temperature outside the property and sends the data to a Thermal Regulation Plant (hereinbelow T.R.P.); the T.R.P., on the basis of preset climate curves, determines the value that the temperature of the water must have at the point of introduction in the distribution plant.

From here, the commands depart for the mixers, which provide to mix part of the delivery water, at higher temperature, with part of the cooler water returning from the property. In such a manner, one obtains the double effect of reducing the delivery temperature and increasing the temperature of the water that returns into the boiler for the heating thereof. Enormous savings are thus achieved with respect to the plants that lack these expedients. One limit of these systems is given by the fact that the climate curves are the theoretical outcome of years of experience. Their actual efficiency is entirely subject to the actual capacity and sensitivity of the technician in identifying a suitable point where the climate probe is positioned, in periodically verifying the state thereof, in selecting the climate curve to be employed on the T.R.P. with adequate knowledge and diligence, in having an actual knowledge of the capacities and limits of the management system as well as an actual knowledge of the operation of the various systems that are interconnected with each other.

Generally, the operation of these systems is given by:
- a boiler capable of bringing the water to decidedly higher temperatures;
- a climate probe for detecting the temperature outside the property;
- a Thermal Regulation Plant which, based on specific climate curves obtained from theory, as a function of the outside temperature detected by the climate probe, determines the temperature which the delivery water, conveyed in the plant, must reach. Therefore, as a function of these parameters, the T.R.P. plant operates on the mixer by mixing the warmer delivery water with the cooler water returning from the plant so as to deliver the exact temperature that the water must have in the plant;
- once the optimal delivery temperature value has been reached, the boiler is modulated (flame reduction) until it is fully stopped, and only restarts when the temperature of the water read at the delivery point (after the mixer) descends below a certain interval of values, this also set by the technician, with respect to the optimal operating value.

As is evident from the above description, essentially two negative factors of this method emerge:
- the first is given by the indispensable movement of the water in the plant, which must be continuous for the necessary detections. However, in such a manner, a forced cooling of the water itself is introduced which for the purpose of energy savings and efficiency is quite considerable;
- the second factor, not less important than the first, consists of entrusting to the capability and sensitivity of a maintenance man the efficiency of a rather complex plant, also operating on theoretical laboratory bases (curves), which do not analyze the single property and for this reason are entirely entrusted to the diligence of the man and to the knowledge of the climate conditions of the site over the years.

Therefore, it is to be recognized that - even with the undoubted effectiveness of the current heating plants for civilian uses - there still remains the problem of energy waste due to the lack of a control and fine-regulation system that allows supplying, to the setting to be heated, only the amount of heat that is actually necessary.

For prudential reasons, all plants deliver more heat than what is actually necessary, in order to prevent suffering from cold; however, this involves energy waste.

An example of a method capable of eliminating greater energy consumption from conventional plants due to the serious deficiency introduced by the continuous movement of the water and its relative cooling, due to said continuous movement indispensable for the operation type, is described in the document EP 1 837 606 A2. In particular, the abovementioned document describes a system that allows regulating a set of cycles of boiler turning on and off; said cycles, notwithstanding the continuous interruptions, do not negatively affect the efficiency of the results, still ensuring suitable comfort while optimizing consumption. This occurs due to an electronic processing unit connectable to the boiler and to the thermostat for temperature detection. Said electronic unit allows automatically activating the boiler and determining the turning on and off times of the boiler itself in a variable manner, as a function of the plant type, and depending on the ambient thermostat positioned in the property to be heated.

It is evident that also this method - which is based on the actual detection carried out over many years of the different behaviors of the water, of the plant and of the property - is nevertheless unable to detect the exact quantity of heat that must actually be added in order to meet the needs of the setting and to make up for the losses that occurred via external dispersion.

For the same purpose, i.e. for the purpose of better optimizing plants, reducing consumption and the costs associated with the conventional climate control systems like those described above, the present industrial invention patent application, described in more detail hereinbelow, proposes a new method for controlling and managing climate control plants in order to optimize the efficiency of said plants and reduce energy consumption, eliminating waste.

By way of a non-limiting example, with reference to the heating plants for civilian uses, the present method more in detail involves controlling and managing specific components of said plants, in particular controlling and managing the system of water circulation within the plant and, consequently, managing the plant itself in an absolutely automatic manner, independent of man's behavior. Such automatic management occurs since it is only dependent on the actual need for the required energy, since the latter is dissipated at each instant by the plant. All of the above occurs simply by operating the turning on and off of the pump/motor system for the water circulation and by measuring the thermal Δ at pre-established points of the plant.

### Description of the invention

The present industrial invention patent application describes a new method for optimizing the efficiency of the conventional climate control plants by allowing the very precise determination of the amount of energy actually removed from the property or by dispersion, being based on the analytical study of the thermal progression of the carrier medium, typically water, during the intentionally-introduced start and stop steps of the plant. In particular, the method analyzes in detail the thermal behavior of the water as a function of the time during the start step, during the heating step - ON step - and during the stop step of the plant - OFF step -. The evaluation of the thermal states of the water during the transients that are generated in the start and stop steps (turning on/stopping of the pumps and/or the generator) allows very precisely detecting the amount of heat removed by the temperature variation sustained by the water during the pause interval.

More in detail, the present method aims to reduce the energy consumption and costs associated with the operation of said plants.

Before entering into the main points of the present description, it should be indicated that this will make reference, by way of a non-limiting example, to the heating plants for civilian uses, taking for granted that the man skilled in the art understands the applicability of the present method, even if with different parameters, also for managing cooling plants and generally all those plants in which the climate control occurs due to a liquid conveyed into the plant via a liquid conveyance system. Nevertheless, for the sake of simplicity, in the course of the following description reference will be made to the application of the method to heating plants with any power.

More in detail, with reference to said heating plants, the energy savings encountered with the use of the present method vary from 30% to 60%, and typically is 40%, with respect to the conventional systems.

Advantageously, the present method, by involving the management of the turning on and off of the pumps for the water circulation of the entire plant, and by exploiting the hysteresis of the water following induced temperature variations, allows transferring heat to the setting to be heated, even when the water inside the plant is "stopped". This allows the radiating elements to equally transfer heat to the setting "by retaining" the hot water at their interior, without said water circulating in the plant. All this by suitably turning off the water pump/motor system, according to predefined cycles. Of course, the heat transfer from the radiating elements will very much depend on the amount of heat removed, cycle after cycle, from the setting; the more heat requested, the greater the cooling of the water in the radiating bodies (radiators). Now, therefore, the method provides for supplementing the heat removed from the setting after each stop state, varying the quantity of heat to be added based on the actual need, all this in an absolutely automatic manner and cycle after cycle.

More in detail:
- the method provides for introducing a stop pause of the water circulation in the plant;
- during the pause, the environment removes heat from the radiators in the case of irradiating heating and from the screed in case of radiant heating (on the floor), cooling the water contained therein;
- at the expiry of the pause, the method provides for restarting the pumps and hence the entire plant. Such ON condition will last until the water has reached the operating temperature value detected before stoppage;
- it is inferred that the ON state will vary with the variation of the heat removal sustained by the water and hence cycle after cycle, the more heat is removed the colder the water will be and the longer the ON time (more energy produced) necessary for bringing the temperature to the operating value; vice versa, the lower the heat removal from the setting, the higher the temperature value of the water at restarting after having attained the desired pause, and the lower the ON time necessary for bringing the water from this value to the set normal operating value.

It is evident that cycle after cycle, the method - by only being concerned with bringing the temperature of the water to its operating value - will provide for supplementing the exact amount of heat removed from the setting, supplementing it cycle after cycle and thus totally eliminating the risk of incurring the excesses or deficiencies of the current methods employed for obtaining a constant temperature inside the property, furthermore by stabilizing the temperature in the setting.

Advantageously, the method according to the present invention allows preventing the formation of condensates and molds in apartments, facilitating a healthier environment in the entire building.

Advantageously, said method allows the plant to deliver the right amount of heat necessary for restoring the actual quantity of thermal energy dissipated with each cycle.

Advantageously, said method is applicable, with the due technical expedients, to all the plants for heating and/or cooling with forced ventilation in which the heating and/or cooling element of the plant is always given by a circulating carrier medium represented by a (liquid or gaseous) fluid. In this case, the stoppage of the plant will always be determined by the temperature progression of the carrier, but the action will no longer be directed to the stoppage of the circulation pumps but directly to the hot or cold generator.

Advantageously, the described method does not require any expedient by man, since the plant which uses it ensures that the learning of the environment's actual need for hot or cold occurs in absolute autonomy and at every instant.

The method, according to the present invention and completely different from current methods, substantially provides for the logical and coherent interpretation of the temperature values of the carrier medium (typically water) measured no longer essentially on the delivery of the fluid but rather at any point of the plant, in particular both on a radiator and at points of the main return branch for the carrier into the heating plant. The collected information allows modulating the heat to be delivered without incurring the risk of generating quantities of energy that are greater or lesser than that actually needed.

The intuition underlying the method described in the present document arises from the consideration that: for many different systems subjected to and/or involving thermal variations, the lower the temperature gradient that can be determined between two systems that are not isolated from each other, the lower the amount of energy to be supplied to the system at lower temperature to ensure that said system reaches the temperature value of the system with higher T. In particular, in the field of the heating plants for civilian uses, it has often been found that the higher the temperature of the setting, reached following the delivery of heat flows by radiators to the surrounding environment, the greater the time employed by the same radiators in order to be cooled and, consequently, the lower the energy to be provided to said radiators, per unit of time, to ensure that they once again reach the maximum temperature value desirable in the context. Substantially, this is due to the lack of considerable heat flows between the same radiators and the heated setting. Thus, given the same thermal energy, provided by the boiler, the times necessary for bringing the liquid contained in the radiator to a value T*ₘₐₓ*, when the surrounding environment is heated, are less than those necessary for bringing said liquid, contained in the same radiator, to the same value T*ₘₐₓ* when the surrounding environment is at a relatively low temperature. Similarly: given the same time intervals, the thermal energy for bringing the liquid in the radiator to the value T*ₘₐₓ*, when the surrounding environment is heated, is less than that necessary when the setting is at a decidedly lower initial temperature. The study and observation of the behavior of these thermal plants has thus allowed rationalizing a method capable of optimizing the efficiency of climate control plants by seeking to reduce, as much as possible, the consumption and costs associated with the operation thereof.

For the method to be effective:
- it is necessary to interrupt, at pre-established and consecutive intervals, the operation of the water pumps and the burners;
- it is necessary that each operation cycle is composed of an ON state and an OFF state;
- it is necessary to identify a well-defined point of the plant for reading the temperatures and the times for attaining said temperatures at that point;
- it is necessary to always have available, during the ON state, the maximum power of the burners.

The aforesaid conditions allow determining:
- the heat absorbed by the property in predefined conditions;
- the heat variations required by the property upon variation of the outside climate conditions;
- the actual amount of heat dissipated in that predetermined time interval; and
- the actual quantity of heat necessary for restoring the heat that was dissipated.

### Brief description of the drawings

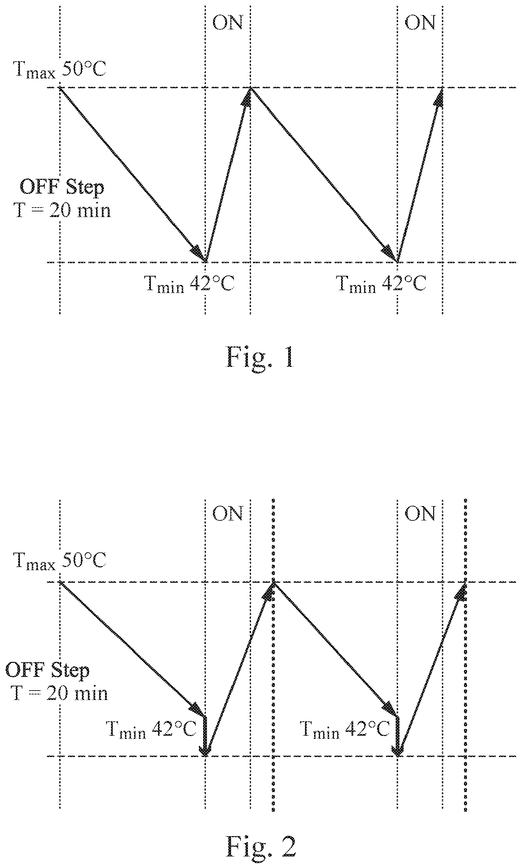

FIGURE 1 shows a graph relative to the progression of the temperature as a function of time and, with reference to the application of the method as in example 1 described hereinbelow, this corresponds to the case in which since there is no external variation of temperature, T*ₘᵢₙ* will always fall around the end count of Δt*_{OFF}*, which in this case is 20 minutes.

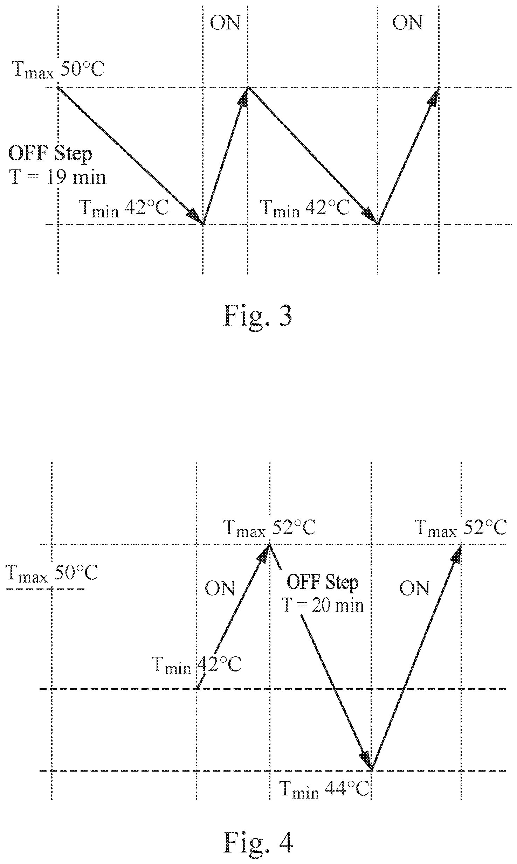

FIGURE 2 shows a graph indicating the progression of the temperature as a function of time when there is greater removal of heat due to the decrease of the outside temperature. During the period Δt*_{OFF}*, the T*ₘᵢₙ* corresponding to 42°C will be detected several seconds, or minutes, before that of the Δt*_{OFF}* of a preceding cycle. Upon verifying this event, also the Δt*_{ON}*, necessary in order to bring the temperature back to the value T*ₘₐₓ*, increases by several seconds or minutes with respect to the ON step of a preceding cycle. The graph in particular intends to show that if the time Δt*ₓ* between the detection of the T*ₘᵢₙ* and the end of the count of Δt*_{OFF}* is less than 30 seconds, no corrective actions of the subsequent cycles are executed, otherwise if said time is greater than 30 seconds one proceeds as represented in the following figure 3.
FIGURE 3 shows a graph indicating the variation of Δt*_{OFF}* from 20 minutes to 19 minutes so that the temperature range always remains 50°C - 42°C. In the subsequent cycles (not shown in the figure in question), the method according to the present invention provides for continuing to check if the T*ₘᵢₙ* is not encountered much before (more than 30 seconds) the end of the count of Δt*_{OFF}*. If this condition should occur, the method provides for proceeding by continuing to decrease the Δt*_{OFF}* to 17 minutes. If, by actuating this correction, the cycles of turning on and off still do not occur as in normal operating conditions, the method provides for proceeding by increasing the T*ₘₐₓ* by 2°C, thus defining a new temperature range from 52°C to 44°C, as shown in the following figure 4.
FIGURE 4 shows a graph corresponding to the case in which the variations of the OFF time of the plant, not having achieved effects such to allow the stabilization of the ON and OFF cycles, require operating by varying the value of the T*ₘₐₓ* by 2°C. In the case of the figure in question, the value of the T*ₘₐₓ* is increased by 2°C. At this point, the method provides for proceeding by defining the new T*ₘₐₓ* - T*ₘᵢₙ* range and then identifying the new T*ₘᵢₙ*. Such parameter is determined by setting the new value T*ₘₐₓ* reachable by the liquid and, once such value is reached, turning off the plant (burner and pumps/motor system for circulating the liquid) and restoring the initial time interval Δt*_{OFF}* of 20 minutes. At the expiry of the 20 minutes, the value of the T*ₘᵢₙ* will be determined which in the case represented by the figure in question corresponds to 44°C. The method according to the present invention then provides for proceeding by verifying that in the subsequent cycles, the T*ₘᵢₙ* is always reached at the expiry of the Δt*_{OFF}* which, in this case, is 20 minutes. If not, one proceeds by executing corrections as described in the preceding figures.

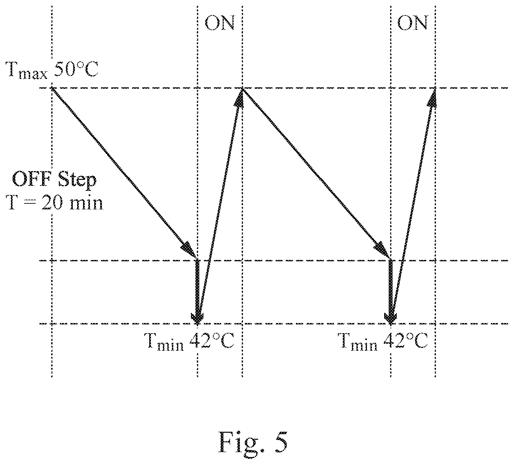

FIGURE 5 shows a graph corresponding to the case in which an increase of the outside temperature is verified. More in detail, the graph in question shows the case in which, following an increase of the outside temperature, the T*ₘᵢₙ* is reached after the period Δt*_{OFF}* of 20 minutes. In this case the present method provides for, in the subsequent cycle, not shown in the figure in question, extending the Δt*_{OFF}*.

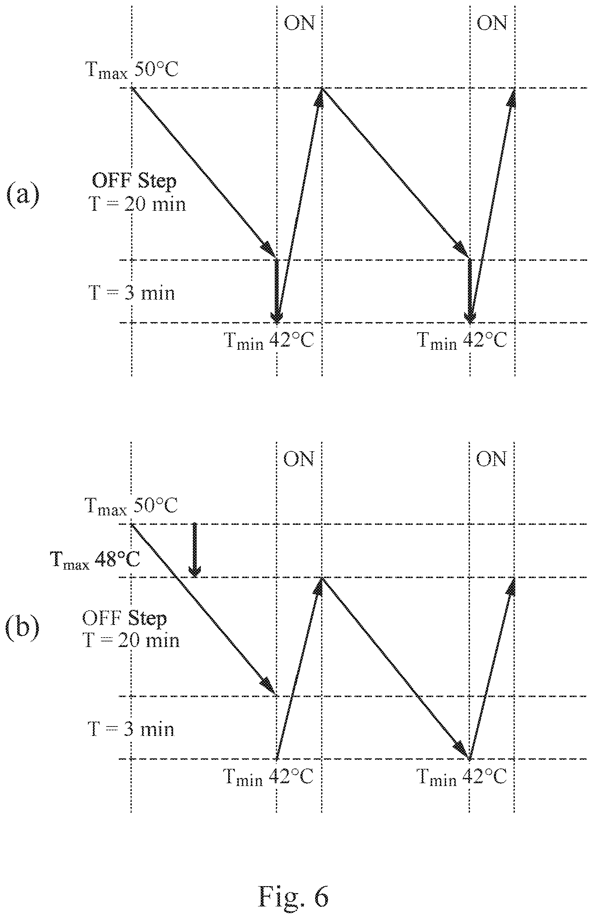

FIGURE 6 shows a graph indicating the corrections to actuate according to the present method when there is an increase of the outside temperature. More in detail, figure 6(a) shows that said corrections are executed up to an increase of three minutes of the Δt*_{OFF}*. Nevertheless, if said corrections are not sufficient to ensure that the set of cycles of turning on and off the plant enters into normal operating conditions, one will proceed by varying the set value of T*ₘₐₓ*, reducing it by 2°C (fig. 6(b)) and, similar to that described in the preceding figures, the new T*ₘᵢₙ* attainable after the period Δt*_{OFF}* of 20 minutes will be defined. Once the new range is defined, it will be verified that the predefined T*ₘᵢₙ* is always encountered at the end count of the Δt_{*OFF*.} If not, hence if there is a delay of over 30 seconds from the expiry of Δt*_{OFF}*, the present method provides for correcting, in the subsequent cycles, the value of the Δt*_{OFF}* until it is increased by not more than 3 minutes. If such corrections are not sufficient for the set of cycles of turning on and off the plant to enter into normal operating conditions, one will proceed by decreasing the value of the T*ₘₐₓ* by a further 2°C.

### Detailed description of the invention

The method for optimizing the efficiency of the climate control plants, object of the present industrial invention patent application, comprises a set of expedients adapted to reduce the energy waste and, consequently, the costs associated with the operation of said plants. By way of a non-limiting example, the present detailed description of the invention will refer to the application of the present method to heating plants for civilian uses in order to optimize the efficiency of such plants. Said method allows the aforesaid energy savings by operating the accurate automated turning off of the pumps set for circulating the carrier medium

(typically water), in addition to operating the turning off of the burner adapted for the heating thereof. More in detail, the present method varies the OFF times of the burners adapted for heating the carrier medium, as well as the times for turning off and hence the OFF times relative to the system of pumps adapted for circulating said carrier. The described method allows the aforesaid energy savings by determining the thermal state of the carrier circulating in the plant (typically, but not exclusively, water) at the point of return of said carrier into the heating plant after a predefined time interval. The detection of the thermal state of the carrier medium can be made at any point (as long as said point is the same with each cycle) of the main return branch for the carrier into the heating plant. It is important that the determination of the thermal state of the carrier occurs on the main return branch into the heating plant even before the carrier is in some way "treated", in order to prevent erroneous readings due to the possible presence of anti-condensate systems and/or mixer valves or other items. It should therefore be specified that the present industrial invention patent application intends to describe and claim a method for optimizing heating plants which is characterized, *in primis*, in that it allows said optimization due to the monitoring of the thermal states of the carrier medium on the main return branch for said carrier into the heating plant, different from the conventional systems that actuate said monitoring on the delivery portions of the plant rather than on the return portions.

For the purpose of understanding the present invention, a representative and non-limiting example is reported hereinbelow of the variation of the plant OFF times, by applying the principles rationalized by said method. It should be indicated that the numeric values indicated hereinbelow are merely exemplifying and non-limiting, taking for granted that the man skilled in the art understands that the applicability of the method is also extended to situations with background conditions different from those reported, and that the essence of the invention lies in the use of the liquid circulating in the plant (water in the below-indicated case) as agent carrying the information necessary for providing, at the return of said carrier into the heating plant, the exact energy amount required by the setting, ensuring that the plant works with optimal efficiency. The method, object of the present description, introduces automatic corrections regarding the quantity of heat to be recovered after each cycle and additionally the automatic adaptation of the heating plant upon variation of the seasonal climatic conditions.

It should be indicated that the values T*ₘₐₓ* and T*ₘᵢₙ* indicated hereinbelow are always detected at the same point of the main return branch for the carrier medium (water, by way of example) into the heating plant.

### Example 1:

Considering the temperature of return from the plant detected at the single points indicated up to now - T*ₘₐₓ* = 50°C the maximum setting reachable by the liquid heated by the boiler, T*ₘᵢₙ* = 42°C the minimum temperature reached by said liquid after having turned off the plant (burner/pumps) for a time interval Δt*_{OFF}* = 20 minutes, and the work time (Δt*_{ON}*) = 12 minutes the time necessary so that the turning on of the burner and the pumps causes the increase of the temperature of the liquid conveyed in the plant from the value T*ₘᵢₙ* to the value T*ₘₐₓ* - the method provides that: if external factors do not come into play, the successive turning on/off cycles of the plant are repeated, all equivalent to each other. If the temperature of the environment outside the boiler decreases, e.g. in temperature-falling weather conditions, there will be a quicker removal of the heat from the setting, which will require an increase of the amount of heat produced by the plant. More clearly, starting from T*ₘₐₓ* = 50°C, during the 20 minutes of pause of the plant more heat is removed from the plant, which will determine the attainment of the T*ₘᵢₙ*, i.e. 42°C, before the expiry of the 20 minutes of OFF. In this condition, the method provides for awaiting and measuring the time that lies between the attainment of 42°C and the end of the count, i.e. the expiry of the 20 minutes. The method according to the present invention provides that if said time interval, indicated herein as Δt*_{X}*, is less than 30 seconds, no corrective actions will be actuated in the subsequent cycle; if instead Δt*_{X}* is greater than 30 sec, in the subsequent cycle the time interval (Δt*_{OFF}*) will be reduced from 20 minutes to 19 minutes. If the correction made is sufficient, in the subsequent cycles the following will occur: starting from T*ₘₐₓ* = 50°C, after a pause corresponding to an interval of 19 minutes, the T*ₘᵢₙ* of 42°C will be attained.

If the outside weather conditions further deteriorate, thus determining a further lowering of the temperatures, the following will occur: starting from T*ₘₐₓ* = 50°C, the T*ₘᵢₙ* of 42°C will be reached before the expiry of the 19 minutes. Also in this case the method provides for awaiting and measuring the time that lies between the attainment of the 42°C and the end of the count of 19 minutes. Also in this case the method provides that if Δt*ₓ* is less than 30 seconds, in the subsequent cycle corrective actions do not have to be completed; if instead Δt*ₓ* is greater than 30 seconds, then the pause time (Δt*_{OFF}*) in the subsequent cycle will be reduced from 19 minutes to 18 minutes. If the correction made is sufficient, in the subsequent cycles there will once again have to be, starting from T*ₘₐₓ* = 50°C, a Δt*_{OFF}* of 18 minutes for the attainment of the T*ₘᵢₙ* of 42°C.

The present method provides for proceeding with the reduction of the off time until said time interval is equal to 17 minutes. If - even after setting the new off time interval to 17 minutes - the system should still not enter normal operating conditions, hence continuing to encounter an anticipation of the attainment of T*ₘᵢₙ*, the method provides that in the subsequent cycle the plant OFF time is not further reduced, but rather that the value set of the T*ₘₐₓ* is increased from 50°C to 52°C. In this case, the new cycle will provide for a T*ₘₐₓ* = 52°C, a Δt*_{OFF}* always equal to 20 minutes, and a T*ₘᵢₙ*, reached at the expiry of Δt*_{OFF}*, equal to 44°C (or new value). In the subsequent cycles, the present method provides for proceeding as described above, i.e. checking if the end of the count (20 minutes) coincides with the attainment of the T*ₘᵢₙ* of 44°C, or if there is a Δt*ₓ* less than 30 seconds or more than the 30 seconds from the attainment of the T*ₘᵢₙ* to the end of the Δt_{*OFF*.} If, for each cycle, the Δt*ₓ* is greater than 30 seconds, one will proceed, also in this case, by reducing the OFF time by one unit for each cycle until a Δt*_{OFF}* is reached equal to 17 minutes, after which, if the system still has not returned to normal operating conditions, one will proceed by increasing the set value by 2°C, so that T*ₘₐₓ* = 54°C.

In general, the method according to the present invention comprises the following steps: a) setting the value T*ₘₐₓ* of the liquid heated by the burner of the boiler/climate control plant; b) defining the Δt*_{OFF}* of the plant, indicating the time interval in which both the burner of the boiler and the pumps set for circulating the water are turned off; c) measuring the T*ₘᵢₙ* at the expiry of Δt*_{OFF}*; d) automatically turning on the burner of the boiler and the pumps, upon reaching the T*ₘᵢₙ*; e) defining the Δt*_{ON}* of the plant indicating the time interval in which the carrier liquid is brought from the value T*ₘᵢₙ* to the value T*ₘₐₓ* The aforesaid steps a), b), c), d), e), represent the I° reference cycle for operating the plant by applying the present method which, as already anticipated, for each cycle includes an OFF step and an ON step for the burners and for the pumps for circulating the carrier medium. The aforesaid I° cycle represents the reference cycle which allows, in subsequent cycles, evaluating and actuating corrective actions based on the variability of the parameters outside the plant - typically these are outside climate variations - in a manner such that said corrective actions ensure that the plant, in the subsequent cycles, works with optimal efficiency, producing the right energy amount for the attainment of a climate control that is ideal for the subjects who perceive it and for the efficiency and operation of the plant itself which will not produce energy waste during operation. The present method subsequently includes a variable number of cycles in which parameters such as Δt*_{OFF}*, and T*ₘₐₓ* are varied as a function of the outside climate conditions. More in detail, after having executed the aforesaid first reference cycle, the method subsequently includes, and for outside climate variations determining a lowering (or an increasing) of the temperature and a consequent increase (or decrease) of the heat to be produced, a II° verification cycle comprising the steps: f) evaluating the new ΔT_{*OFF*,} i.e. the time interval necessary for the liquid within the plant to reach the value T*ₘᵢₙ* from T*ₘₐₓ*, once the burner and the pumps are turned off. Said evaluation occurs by turning off the plant (pumps and burner) after reaching the T*ₘₐₓ*, and measuring the time interval Δt*ₓ* between the attainment of the T*ₘᵢₙ* and the end of the count of Δt*_{OFF}* analogous to that of the preceding I° cycle. If said Δt*ₓ* is less than 30 seconds, no corrective actions will be carried out in the subsequent cycle, if instead it is greater than 30 seconds, a variation of the setting of the new Δt*_{OFF}* will be executed in the subsequent III° cycle; g) turning on the plant, upon reaching T*ₘᵢₙ*, for a time interval Δt*_{ON}* necessary for bringing the liquid to the value *Tₘₐₓ*. A III° corrective cycle is then executed comprising the steps of: h) turning off the plant (burner/pumps of the water) for a time interval corresponding to the new Δt_{*OFF*.} Said new time interval will be one minute less than (or greater than) the preceding Δt*_{OFF}* of said I° reference cycle; i) verifying that at the expiry of said new Δt*_{OFF}*, the T*ₘᵢₙ* is attained; J) evaluating the possible time interval Δt*ₓ* between the attainment of the T*ₘᵢₙ* and the end of the count of the new previously determined Δt_{*OFF*.} If said Δt*ₓ* is less than 30 seconds, in the subsequent cycle there will be no variations of the new Δt_{*OFF*.} Otherwise, if said Δt*ₓ* is greater than 30 seconds, in the subsequent IV° cycle the plant will turn off for a Δt*_{OFF}* of one minute less than that of the preceding cycle; k) turning on the plant for a time interval Δt*_{ON}*, until the T*ₘₐₓ* is reached.

The present method provides for the actuation of variations of the Δt*_{OFF}* - of up to three minutes with respect to the first value of Δt*_{OFF}.* If said variations are not sufficient to ensure that the cycles enter into normal operating conditions, i.e. that they are all repeatable, the method provides for operating by varying the set value of the T*ₘₐₓ* and for restoring a value of Δt*_{OFF}* corresponding to the initial value. More in detail, said variation, if the outside temperature decreases (or increases), consists of increasing (or lowering) the T*ₘₐₓ* by 2°C. Consequently, also the value T*ₘᵢₙ* reached at the expiry of Δt*_{OFF}* will be greater than (or less than) the initial value, as reported in the preceding example 1.

If instead of a lowering of the outside temperature there is an increase, which requires a lower request of heat produced by the boiler, the method according to the present invention provides for operating by making corrections similar to that described above but with positive corrections of the Δt*_{OFF}*, i.e. increasing said time interval by maximum three minutes with respect to the initial value and, if said corrections are not sufficient for ensuring that the cycles come into normal operating conditions, making "negative" corrections of the T*ₘₐₓ* value, i.e. decreasing said value by 2°C. One therefore proceeds by actuating the same principles described in the example relative to the case of a lowering of the outside temperature.

It should be indicated that the method according to the present invention makes use of known systems and devices for the self-regulation of the turning off of the plant. Said devices are typically, but not exclusively, remote control switches.

## Claims

1. Method for optimizing the efficiency of climate control plants, comprising the steps of:
a) Setting a maximum temperature value, (T*ₘₐₓ*), of the carrier medium heatable by the burner of said climate control plant;
b) Defining a time interval (Δt*_{OFF}*) corresponding to a time interval in which said plant is turned off in an automated manner, and turning off said plant;
c) Identifying the minimum temperature value, (T*ₘᵢₙ*), reached by the carrier medium at the expiry (Δt*_{OFF}*) of the preceding step b);
d) Automated turning on of the plant when the carrier medium of the plant reaches said minimum temperature value (T*ₘᵢₙ*);
e) Identifying a time interval (Δt*_{ON}*) corresponding to a time interval in which the turning on of the plant allows bringing the liquid back to the initial maximum temperature value (T*ₘₐₓ*),
said steps a), b), c), d), e) together representing the I° reference cycle of said method, the latter providing that the turning off of the plant that occurs in said step b) and the turning on of the plant that occurs in said step d) and continues in said step e) includes both the turning on/off of the burner of the plant, such as the burner of a boiler set for heating the carrier medium, and the turning on/off of the system of pumps/motors set for circulating the carrier medium, said carrier medium being a liquid or gaseous fluid, said method being **characterized in that** it provides for detecting the temperature of the conductive carrier medium when the same returns into the plant, said values of minimum temperature value (T*ₘᵢₙ*) and maximum temperature value (T*ₘₐₓ*) being detected at a same point of the plant which is any point of the main return branch for the carrier medium into the heating plant, **in that** it comprises further corrective cycles adapted to correct the values set in said I° reference cycle upon variation of the weather conditions affecting the climate of the setting to be climate-controlled with said method, the latter comprising the following steps of:
f) Defining a new (Δt*_{OFF}*, the latter being the time interval necessary for the liquid of the plant, starting from the maximum temperature value (T*ₘₐₓ*), to reach the minimum temperature value (T*ₘᵢₙ*), when there is a lowering or an increase of the temperature that is caused by outdoor weather variations, said definition occurring by turning off both the burner and the pumps for circulating the liquid in the plant after reaching the maximum temperature value (T*ₘₐₓ*), and measuring the time interval (Δt*ₓ*) between the attainment of the minimum temperature value (T*ₘᵢₙ*) and the end of the count of (Δt*_{OFF}*) of said I° reference cycle, and regarding said time interval (Δt*ₓ*) of said step f) it is to be evaluated if its duration is less than or greater than 30 seconds, said method providing for the completion of corrective actions in the subsequent cycles only if said (Δt*ₓ*) is greater than 30 seconds;
g) Turning on the burner and the pumps for circulating the liquid, once minimum temperature value (T*ₘᵢₙ*) has been reached, for an interval (ΔT*_{ON}*) necessary for bringing the liquid to the maximum temperature value (T*ₘₐₓ*);
said steps f) and g) representing the II° verification cycle provided by said method, the latter comprising a III° corrective cycle comprising the steps of:
h) Turning off the plant, burner/pumps of the water, for a time interval corresponding to the new interval (Δt*_{OFF}*) defined in said II° verification cycle, said new interval (Δt*_{OFF}*) being one minute less than or greater than the interval (Δt*_{OFF}*) of said I° reference cycle depending on whether there was respectively an anticipation or delay greater than 30 seconds in said step f) of the preceding said II° verification cycle;
i) Verifying that at the end of the new interval (Δt*_{OFF}*), the carrier medium reaches the minimum temperature value (T*ₘᵢₙ*);
j) Evaluating the possible time interval (Δt*ₓ*) between the attainment of the minimum temperature value (T*ₘᵢₙ*) and the end of the count of said new interval (Δt*_{OFF}*), and it is to be evaluated if the duration of said interval (Δt*ₓ*) is less than or greater than 30 seconds;
k) Turning on the plant for a time interval (Δt*_{ON}*) until the maximum temperature value (T*ₘₐₓ*) is reached,
said method also being **characterized in that** it provides for, in the cycles following said I° reference cycle, the actuation of variations of the time interval (Δt*_{OFF}*) of up to three minutes with respect to said time interval (Δt*_{OFF}*) of the I° reference cycle, said method also being **characterized in that** it provides for variations of the setting of the maximum temperature value (T*ₘₐₓ*) of + 2°C or - 2°C, depending on whether a lowering or an increase of the outdoor temperature has been verified, and when the preceding variations of the time interval (Δt*_{OFF}*) of three minutes still induce variations of the comparison of the minimum temperature value (T*ₘᵢₙ*) with respect to the end count of the time interval (Δt*_{OFF}*).

2. Method for optimizing the efficiency of climate control plants according to the preceding claim **characterized in that** the carrier medium circulating in the climate control plant is water.

3. Method for optimizing the efficiency of climate control plants according to any one of the preceding claims **characterized in that** the self-regulation of the turning on/off of the plant occurs with common remote control switches.

4. Use of the method according to the preceding claims for applications on climate control plants.

5. Use of the method according to claims 1, 2 and 3 for applications on heating plants for civilian uses.

## Patentansprüche

1. Methode für die Optimierung der Leistung von Klimatisierungsanlagen, welche folgende Phasen umfasst:
a) Einstellung eines Werts für die Höchsttemperatur Tₘₐₓ für das vom Brenner genannter Klimatisierungsanlage erhitzte Trägermedium;
b) Bestimmung eines Intervalls Δt_{OFF}, das dem Zeitraum entspricht, während dessen die Anlage automatisch abgeschaltet wird, und Abschalten der Anlage;
c) Bestimmung des Mindesttemperaturwerts Tₘᵢₙ, der vom Trägermedium bei Ablauf von Δt_{OFF} der vorigen Phase b) erreicht wird;
d) Automatisches Anschalten der Anlage bei Erreichen genannter Tₘᵢₙ durch das Trägermedium der Anlage;
e) Bestimmung eines Intervalls Δt_{ON}, das dem Zeitraum entspricht, während dessen das Einschalten der Anlage die Temperatur der Flüssigkeit wieder auf den Anfangswert Tₘₐₓ zurückführt.
Genannte Phasen a), b), c), d) und e) stellen gemeinsam den 1. Bezugszyklus dieser Methode dar. Laut letzterer ist vorgesehen, dass das Abschalten der Anlage, das in genannter Phase b) erfolgt, und das Einschalten der Anlage, das in genannter Phase d) erfolgt und über die Phase e) andauert, sowohl das Ab-/Einschalten des Anlagenbrenners (z.B. der Brenner eines Heizkessels, der für die Erhitzung des Trägermediums zuständig ist) als auch das Ab-/Einschalten des Pumpen-/Motorsystems umfasst, das für die Umwälzung des Trägermediums zuständig ist, bei dem es sich um ein flüssiges oder gasförmiges Fluid handelt. Genannte Methode ist **durch das Merkmal gekennzeichnet**, dass sie die Messung der Temperatur des Trägermediums bei dessen Rückkehr zur Zentrale vorsieht, wobei genannte Werte Tₘᵢₙ und Tₘₐₓ jeweils an derselben Anlagenstelle erfasst werden, die sich an einer beliebigen Stelle der Hauptrückführleitung des Trägermediums zur Heizzentrale befindet, **sowie durch das Merkmal**, dass sie weitere Korrekturzyklen umfasst, in denen die in genanntem 1. Bezugszyklus eingestellten Werte bei Variationen der das Raumklima beeinflussenden Witterungsbedingungen entsprechend angepasst werden, wobei folgende Phasen vorgesehen sind:
f) Bestimmung eines neuen Δt_{OFF}, wobei letzteres der Zeitspanne entspricht, die verstreicht, bis die Temperatur der Anlagenflüssigkeit vom Wert Tₘₐₓ zum Wert Tₘᵢₙ absinkt, wenn es zu einer durch Witterungsvariationen verursachten Senkung oder Erhöhung der Temperatur kommt, wobei diese Bestimmung erfolgt, indem sowohl der Brenner als auch die Umwälzpumpen abgeschaltet werden, nachdem Tₘₐₓ erreicht worden ist, und das Intervall Δt_{X} gemessen wird, das zwischen dem Erreichen von Tₘᵢₙ und dem Ablauf von Δt_{OFF} des 1. Bezugszyklus verstreicht, wonach für genanntes Δt_{X} von genannter Phase f) beurteilt wird, ob dessen Dauer unter oder über 30 Sekunden liegt, denn die Methode schreibt Korrekturmaßnehmen an den darauffolgenden Zyklen nur dann vor, wenn genanntes Δt_{X} über 30 Sekunden liegt.
g) Einschalten von Brenner und Umwälzpumpen bei Erreichen von Tₘᵢₙ für die Dauer von Δt_{ON}, die erforderlich ist, um die Flüssigkeitstemperatur wieder auf Tₘₐₓ zurückzuführen.
Genannte Phasen f) und g) stellen den von dieser Methode vorgesehenen 2. Überprüfungszyklus dar, auf den ein weiterer 3. Korrekturzyklus mit diesen Phasen folgt:
h) Abschalten der Anlage (Brenner/Wasserpumpen) über ein zeitliches Intervall, das dem neuen im 2. Überprüfungszyklus bestimmten Δt_{OFF} entspricht, wobei das neue Δt_{OFF} um eine Minute kürzer oder länger ist als das Δt_{OFF} des genannten 1. Bezugszyklus, je nachdem ob es in genannter Phase f) des genannten 2. Überprüfungszyklus zu einem um mehr als 30 Sekunden verfrühten oder verzögerten Erreichen der Mindesttemperatur gekommen war.
i) Überprüfung, ob das Trägermedium den Wert Tₘᵢₙ genau am Ende des neuen Δt_{OFF} erreicht.
j) Beurteilung des eventuellen zeitlichen Intervalls Δt_{X} zwischen dem Erreichen von Tₘᵢₙ und dem Ablauf des neuen Δt_{OFF}, wobei zu beurteilen ist, ob dessen Dauer kürzer oder länger als 30 Sekunden ist.
k) Einschalten der Anlage über ein zeitliches Intervall Δt_{ON} bis zur Erreichung von Tₘₐₓ.
Dabei ist diese Methode ferner **durch das Merkmal gekennzeichnet**, dass in den auf den genannten 1. Bezugszyklus folgenden Zyklen die Vornahme von Variationen des Δt_{OFF} um bis zu drei Minuten gegenüber dem genannten Δt_{OFF} des 1. Bezugszyklus vorgesehen sind, **sowie durch das Merkmal**, dass Variationen der Einstellung von Tₘₐₓ um +2°C oder -2°C vorgesehen sind, je nachdem, ob es zu einer Senkung oder Erhöhung der Außentemperatur gekommen war, und wenn trotz der zuvor vorgenommenen Variationen des Δt_{OFF} um drei Minuten weiterhin der Zeitpunkt des Eintretens von Tₘᵢₙ nicht mit dem Ende von Δt_{OFF} übereinstimmt.

2. Methode für die Leistungsoptimierung von Klimatisierungsanlagen entsprechend dem vorstehend aufgeführten Anspruch, der **dadurch gekennzeichnet ist, dass** es sich beim Trägermedium der Klimatisierungsanlage um Wasser handelt.

3. Methode für die Leistungsoptimierung von Klimatisierungsanlagen entsprechend einem beliebigen der zuvor aufgeführten Ansprüche, der **durch das Merkmal gekennzeichnet** ist, dass die automatische Regelung von Ab-/Einschalten der Anlage über gewöhnliche Schütze erfolgt.

4. Einsatz der Methode laut obigen Ansprüchen für Anwendungen an Klimatisierungsanlagen.

5. Einsatz der Methode laut Ansprüchen 1, 2 und 3 für Anwendungen an Heizungsanlagen für Büro- und Wohngebäude.

## Revendications

1. Méthode d'optimisation du rendement des installation de climatisation, comprenant les phases de:
a) Fixation d'une valeur de température maximale, Tmax, du milieu porteur chauffable par le brûleur du système de climatisation précité;
b) Définition d'un intervalle de temps ΔtOFF correspondant à un intervalle de temps au cours duquel le système susmentionné est éteint de manière automatisée et arrêt de l'installation susmentionnée;
c) Détermination de la valeur de température minimale, Tmin, atteinte par le milieu vecteur à l'expiration du ΔtOFF de la phase b) ci-dessus;
d) Mise en marche automatisée de l'installation lorsque le milieu porteur atteint le Tmin;
e) Détermination d'un intervalle de temps ΔtON correspondant à un intervalle de temps pendant lequel l'allumage de l'installation permet de ramener le liquide à sa valeur initiale de Tmax,
Ces phases a), b), c), d), e) représentant, dans l'ensemble, le 1°cycle de référence de cette méthode, ce dernier en prévoyant que l'arrêt de l'installation au cours de la phase b) et l'allumage de l'installation au stade d) qui se poursuit au stade e) inclut à la fois l'extinction/allumage du brûleur de l'installation, comme le brûleur d'une chaudière servant à chauffer le milieu vecteur, soit l' arrêt/l'allumage du système de pompes/moteurs destiné à la circulation du milieu vecteur, dit-on, parce qu'il s'agit d'un fluide liquide ou aérable, cette méthode se **caractérise par** le fait de prévoir la détection de la température du milieu conducteur au retour de celui-ci à la centrale, ces valeurs de Tmin et de Tmax étant relevées en un même point de l'installation qui soit un point quelconque de la branche principale de rentrée du milieu vecteur en centrale thermique, comprendre d'autres cycles correctifs permettant de corriger les valeurs de référence définies dans le 1°cycle en fonction des variations des conditions météorologiques influençant le climat de l'environnement par cette méthode, ce dernier comprenant les phases suivantes:
f) Définition d'un nouveau ΔtOFF, ce dernier étant l'intervalle de temps nécessaire pour que le liquide de l'installation atteigne de la valeur de Tmax la valeur de Tmin lorsqu'une baisse ou une élévation de la température causée par des variations météorologiques se produit externes, cette définition est obtenue en éteignant le brûleur et les pompes de circulation du liquide dans l'installation après avoir atteint le Tmax et en mesurant l'intervalle de temps Δtx entre la réalisation du Tmin et la fin du comptage de ΔtOFF du 1°cycle de référence susmentionné, du Δtx susmentionné de la phase f) s'il s'agit d'une durée inférieure ou supérieure à 30 secondes, cette méthode n'étant applicable que si le Δtx susmentionné dépasse 30 secondes;
g) Mise en marche du brûleur et des pompes de circulation du liquide, le Tmin atteint, pour un intervalle ΔtON nécessaire pour ramener le liquide à la valeur de Tmax;
ces phases f) et g) en représentant le 2°cycle de vérification prévu par la méthode ci-dessus, ce dernier comprend un 3°cycle correctif comprenant les phases de:
h) Arrêt de l'installation, brûleur/pompe à eau, pendant un laps de temps correspondant au nouveau ΔtOFF défini dans le 2° cycle de vérification, ce nouveau ΔtOFF étant inférieur ou supérieur d'une minute par rapport au ΔtOFF du 1°cycle de référence selon qu'une avance ou un retard supérieur à 30 secondes a été effectué à ce phase f) du précédent 2°cycle de vérification;
i) Vérifier qu'à la fin du nouveau ΔtOFF, le moyen transporteur atteint la valeur de Tmin;
j) Estimation de l'intervalle de temps Δtx entre la réalisation du Tmin et la fin du comptage de ce nouveau ΔtOFF, si sa durée est inférieure à 30 secondes;
k) Mise en marche de l'installation pour un intervalle de temps ΔtON jusqu'à ce que le Tmax soit atteint, cette méthode étant également **caractérisée par** le fait de prévoir dans les cycles suivants le 1° cycle de référence, la mise en œuvre de variations du ΔtOFF jusqu'à 3 minutes par rapport au ΔtOFF du 1° cycle de référence, cette méthode étant également **caractérisée par le fait que** des variations du réglage du Tmax de +2°C ou de 2°C sont attendues, selon que la température extérieure diminue ou augmente et que les précédentes variations du ΔtOFF de trois minutes entraînent encore des variations du Tmin par rapport à la fin du comptage du ΔtOFF.

2. Méthode d'optimisation du rendement des installations de climatisation selon la revendication précédente **caractérisée par le fait que** le vecteur circulant dans le système de climatisation est l'eau.

3. Méthode d'optimisation du rendement des installations de climatisation selon une des revendications précédentes **caractérisée par le fait que** l'autorégulation de l'arrêt/allumage de l'installation se fait par des télérupteurs communs.

4. Utilisation de la méthode selon les revendications précédentes pour des applications sur installations de climatisation.

5. Utilisation de la méthode conformément aux revendications 1, 2 et 3 pour les applications applications sur installations de chauffage pour usages civils.
